# EUROPEAN PATENT APPLICATION

(11) **EP 4 011 184 A1**
(43) Date of publication of application: **15.06.2022**
(21) Application number: 20213574.5
(22) Date of filing: 11.12.2020
(51) Int. Cl.: A01B 51/02

(54) **SYSTEM FOR THE USE IN PRECISION, SMART AND/OR AUTOMATED FARMING APPLICATIONS AND FOR ARRANGEMENT ON A LAND LOT**

(71) Applicant: Krause-Tünker, Sascha, 21027 Ispra (VA) (IT)
(72) Inventor: Krause-Tünker, Sascha, 21027 Ispra (VA) (IT)
(74) Representative: Weyers, Christopher

(57) **Abstract**

The invention concerns a system (1) for the use in precision, smart and/or automated farming applications and for arrangement on a land lot (2) comprising at least one linear guide (3) and at least one carriage (4), in particular moveable along the linear guide (3), preferably in a longitudinal direction, in the following referred to as X-direction,
wherein the carriage (4) comprises a transverse guide (5) configured to guide a platform (6) in a lateral direction, in the following referred to as Y-direction, transversely to said linear guide (3),
wherein at least one sensing means (7) for sensing a cultivation related property and/or a cultivation means (8) for cultivation of soil and/or plants of the land lot (2) or of one or multiple section(s) thereof is/are provided,
wherein the sensing means (7) and/or the cultivation means (8) is arranged on the carriage (4), in particular on the platform (6).

## Description

The invention relates to a system for the use in precision, smart and/or automated farming applications and for arrangement on a land lot. Furthermore, the invention relates also to a method for using the above-mentioned system.

Advancing digitalization also enables an application in the agricultural sector. The so-called "e-agriculture" focusses on the enhancement of agriculture development through improved information and communication processes. Smart farming enables further a reduction of the manpower requirement for the cultivation of soil and/or plants of a specific land lot. Therefore, a cost reduction can be achieved.

Moreover, smart farming can link certain weather information with the cultivation of the soil and/or the plants. An intelligent behaviour can thus be reached.

Smart farming concepts can base on observing, measuring and/or responding to inter and intra-field variability in crops. In particular, the aim is to optimize the conditions for plants growth and to minimize the use of fertilizer, pesticides and/or herbicides. Preferably, the system can recognize individual plant growth conditions and/or can interlink the cultivation of the crops, the soil and/or the plants with further information, in particular about the growth conditions.

In praxis it is known that the systems for acquiring and/or determining specific information linked to the plant growth conditions are placed on a tractor and/or another wheel or crawler track-based machinery. Therefore, a person driving the tractor is still required. A totally automated system cannot be provided. Further, it is also known that drones can be equipped with sensors to detect specific information. Nevertheless, the information detected with the drone can be processed but the cultivation of the soil and/or the plants is still "conventional".

Accordingly, there are limits to the automation of agriculture.

The object of the present invention is it to improve the automated cultivation of soil and/or plants of a land lot and preferably to carry out the aforementioned cultivation with reduced personnel input.

The above object is achieved by a system according to claim 1 or by a method according to claim 12. Advantageous developments are subject of the dependent claims.

The proposed system is preferably designed for the use in precision, smart and/or automated farming applications and for arrangement on a land lot. The system comprises at least one linear guide and at least one carriage, which is in particular moveable along the linear guide. Preferably, the carriage can be moved in a longitudinal direction, which is in the following referred to as X-direction. The carriage comprises a transverse guide configured to guide a platform in a lateral direction, in the following referred to as Y-direction. Preferably, the Y-direction is transversally and/or oblique and/or inclined to said linear guide and/or to the X-direction.

Preferably, at least one sensing means for sensing a cultivation related property is provided. Alternatively or additionally, a cultivation means for cultivation of soil and/or plants of the land lot or of one or multiple section(s) thereof is provided.

In particular, the sensing means and/or the cultivation means is arranged on the carriage, in particular on the platform.

More preferably, the sensing means is arranged on the platform, wherein at least one cultivation means can be arranged on the carriage but not on the platform. In other embodiments, both - the sensing means and the cultivation means - can be arranged either on the carriage or on the platform.

The sensing means enables to analyse and/or determine and/or to acquire information with regard to a cultivation related property.

Thus, indicators for the cultivation can be acquired to improve the cultivation of the soil and/or the plants of the land lot. This can allow to control the status of the plants, in particular to see whether diseases are developing, if the plants are suffering from water stress, nitrogen stress or lodging. Furthermore, it can be determined whether the plants are destroyed or damaged.

However, the sensing means is not required to cultivate the soil and/or the plants. In further embodiments, the system can comprise at least one cultivation means without having any sensing means, wherein information for the cultivation of the soil and/or the plants can in particular come from at least one weather station, from an external server and/or from other sensors.

Advantageously, the platform is preferably moveable in at least two directions, in particular the X-direction and the Y-direction. In particular, the system is a universal basis for a wide range of work steps of farming.

It can substitute the crossing over of conventional wheel or crawler-based machinery and hence avoid soil consolidation.

Moreover, the personnel input can be reduced for the reason that the system can in particular work automated and/or independently. Even the cultivation of soil and/or plants of the land lot can be automated and can in particular be carried out without any operating personal.

Furthermore, the inventive system is in particular less expensive than the systems for smart farming known in praxis. Additionally, the inventive system is in particular robust and/or solid, wherein the system is furthermore designed for high forces.

The sensing means, which can be integrated on the carriage, can in particular replace a satellite-based positioning system having position, in particular GPS, sensors and can therefore reduce the costs for the smart farming application.

Thus, the smart and/or automated farming application can be facilitated by the inventive system.

According to a preferred embodiment of the present invention, the linear guide comprises rails that can be arranged next to each other. In particular, the rails are arranged essentially parallel next to each other. The carriage can furthermore be arranged between the rails. Preferably, the carriage is mounted in a moveable manner to the linear guide, in particular the rails, at its ends.

Alternatively or additionally, a driving device is assigned to the carriage in such a way that the carriage is moveable in the X-direction, preferably between the two rails. Therefore, the rails can preset the X-direction. Further, the rails enable a solid construction of the system and a stable arrangement of the carriage on the linear guides. In particular due to the robust design of the rails, weather influences or destruction of the system by storm, wind and/or rain can be avoided. Moreover, the rails can ensure a cost-reduced design of the system.

Preferably, the linear guide is connected to pillars for spacing from the land lot. In particular, the pillars are arranged at least at the ends of the linear guide. Especially preferably, at least one linear guide is connected to at least two preferable multiple, in particular essentially equidistantly distributed, pillars. Therefore, further pillars can be arranged at the linear guide(s) - in particular depending on the lengths of the linear guide.

The pillars can in particular ensure that there is a distance between the platform and/or the carriage and the land lot. Thus, the sensing means can scan a larger area.

Furthermore, the integration of cultivation means is arranged in such a way that due to the distance the cultivation means can cultivate the soil and/or the plants in particular only when needed. Thus, a cultivation of the soil and/or the plants is not necessarily carried out over the whole area of the land lot and/or of multiply sections thereof. A demand-oriented application can therefore be provided.

According to a further preferred embodiment, the sensing means is configured for sensing information about a climatic and/or a weather condition, soil condition, about cropping condition and/or about a disease, in particular of the plants.

A climatic or weather condition can be in particular connected to hail, drought, sunshine duration, air humidity, air temperature, wind speed and/or rain.

Further, a soil condition can be linked to the texture, the depth and/or the nitrogen level of the soil.

Cropping conditions can be in particular cropping practices, like no-till farming and/or weed conditions.

Therefore, the aforementioned different conditions can be linked to the cultivation related property that can be sensed by the at least one sensing means.

Moreover, a plurality of sensing means can be provided which can in particular sense different cultivation related properties. The sensing of the aforementioned information can make it possible to cultivate the soil and/or plants according to their needs, in particular to increase the growth of the plants.

Especially preferably, the sensing means can sense the cultivation related property continuously or in predefined intervals. Therefore, in particular permanent indicators can be determined to provide the farmers and/or the system with information about the main environmental constants.

According to a preferred embodiment of the present invention, a changing means is provided and configured to enable the carriage to cross and/or to change the linear guides, preferably two adjacent linear guides.

In particular, the changing means can provide that the carriage which is arranged between two rails can be transported to another linear guide. Especially, the linear guides, preferably configured as rails, can be arranged next to each other.

The changing means preferably enables that the carriage can be transported to another land lot, in particular to sense cultivation related property with the sensing means and/or to cultivate the soil and/or the plants with the at least one cultivation means. Thus, the total number of the carriages that are needed to cultivate a certain area can be reduced.

Therefore, the costs for providing an inventive system can be further reduced.

It is also possible that one carriage has at least one the sensing means, but no cultivation means, wherein another carriage has at least one cultivation means, wherein both carriages can be crossed and/or changed between the linear guides by the changing means.

In particular, the at least one sensing means and/or the at least one land cultivation means is arranged moveable on the carriage, in particular wherein the sensing means and/or the cultivation means can be moved via the platform.

Preferably, the at least one sensing means and/or the cultivation means is moveable along the longitudinal extension of the carriage, in particular in Y-direction. Especially preferably, the sensing means and/or the cultivation means can be driven by a driving device.

Alternatively or additionally, the platform on which the sensing means and/or the cultivation means is arranged can be driven by the driving device and/or an own assigned drive means. Preferably, the driving device drives the carriage along the X-direction. The driving device can be further configured to move the land cultivation means and/or the sensing means, preferably the platform, in Y-direction.

Alternatively, the sensing means and/or the cultivation means and/or the platform can be assigned to a further drive means which can move the aforementioned means in the Y-direction.

The motion in X- und Y-direction enable to sense and/or cultivate a large area, wherein the position of the sensing means and/or the cultivation means can be changed, in particular with regard to the demand.

Preferably, a communication device is assigned to the sensing means in such a way that information, preferably information about the land lot, generated by the sensing means can be transmitted. The information can in particular be transmitted to an external server in which the information acquired by the sensing means can be processed, in particular to determine the best behaviour for the cultivation of the soil and/or the plants. Therefore, the communication device enables that the system can be connected with further data processing systems, like for example an external server. Furthermore, the transmittance of the information can ensure that a remote monitoring and/or control of the system can be carried out.

Alternatively or additionally, the communication device is preferably assigned to the sensing means and/or the land cultivation means in such a way that information can be received. This information can in particular be transmitted from an external server and/or can refer to the farming application and/or the land lot.

For example, the communication device can receive information from a weather station, wherein this information can be used for the cultivation.

More preferably, the processing device is assigned to at least one sensing means and/or to the communication device to receive information relating to the farming application and/or the land lot.

Preferably, the processing device is designed to generate signals for cultivation of the soil and/or plants.

Alternatively or additionally, the processing device can further be designed to acquire information with at least one sensing means, in particular wherein the processing device is arranged on the carriage and/or on the platform.

In particular, the processing device is coupled to the cultivation means, the sensing means, the carriage, the platform and/or the driving means in order to control the functioning of the respective device and/or means. Thus, the functioning of the respective device and/or means can be adapted to the cultivation related properties and/or to further information received from the communication device, like for example information from the weather station. This can further enhance the growth of the plants.

Furthermore, the at least one cultivation means is preferably designed to applicate cultivation material on the land lot. Cultivation material can in particular be seeds, herbicides, water, fertilizers and/or pesticides. Thus, the application of the cultivation material can be carried out with smart farming applications, wherein the application of the cultivation material can be adapted to cultivation properties of the plants and/or the soil of the land lot.

Preferably, the at least one cultivation means comprises at least one robot arm. The robot arm can move independently from the linear guide and/or the carriage, in particular wherein the robot arm is arranged on the carriage. Especially, the robot arm can be used for digging, harvesting and/or weed and/or waste removal. Thus, the robot arm can be used to improve the cultivation of the soil and/or the plants of the land lot. For example, the functioning of the robot arm can be adapted to the cultivation related property that is sensed by the sensing means. Further, the sensing means can for example determine, whether the plants are ready to be harvested.

Preferably, the linear guide, in particular at least one rail of the linear guide, comprises and/or is assigned to at least one supply means. The supply means can be in particular a supply line, tube, pipe, gutter and/or conveyer belt. More preferably, the supply means can be used for supplying water, energy, farming material and/or data.

In particular, the carriage can be designed to connect the supply means to be supplied with supply material, preferably for the cultivation means. Moreover, the supply means can be connected to at least one supply station which is arranged on the linear guide, wherein, preferably, the carriage can be coupled to the supply station to be supplied with supply material, preferably for the cultivation means. Thus, the supply of the carriage can be controlled by the supply station. The supply means can further improve the automated functioning of the whole system for the reason that no personnel input is required for supplying material to the carriage.

According to a further preferred embodiment the linear guide, preferably at least one rail of the linear guide, comprises and/or is assigned to at least one transport means. A transport means can be in particular a tube, pipe, gutter and/or conveyer belt. Furthermore, the transport means can be used to remove material, in particular harvesting material and/or waste, of the land lot. This material can for example be gathered by the cultivation means. Therefore, the transport means can interact with the cultivation means to improve the flow of the cultivation material or the gathered material. Further, the transport means is preferably used in an automated system in which in particular the personnel input can be reduced.

Preferably, the linear guide comprises positioning means for positioning of the carriage. In particular, the positioning means can be cogs. More preferably, the carriage is designed to detect the position for location specification and/or location determination. Therefore, the positioning means is used for an easy positioning of the carriage. In particular, no further satellite data, like GPS, is needed to determine the position of the carriage. This facilitates the functioning of the whole system.

Furthermore, the proposed method for using a system according to one of the aforementioned embodiments is used in particular for precision, smart and/or automated farming of a land lot. In particular, the carriage moves in X-direction. The sensing means can sense a cultivation related property. Alternatively or additionally, the cultivation means can cultivate the soil and/or the plants of the land lot or of one or multiple section(s) thereof.

Preferably, the platform, in particular together with a sensing means and/or the cultivation means, moves in Y-direction. Thus, the platform can be moved by the carriage in X-direction, wherein the platform can further move in Y-direction. Thus, the whole area of the land lot can be scanned and/or covered by the platform.

Preferably, the functioning of at least one cultivation means and/or at least one sensing means is controlled by the processing device. Thus, the working of the respective means and/or device is adapted to the generated signals of the processing device and therefore a smart farming application is achieved.

Especially preferably, the processing device analyses and/or processes information with artificial intelligence to generate signals for soil and/or plant cultivation of the land lot and/or to acquire and/or to determine further information with at least one sensing means. This enables that the functioning of the system can be improved during the duration of the use of the system. The processing device can adapt the functioning of the respective controlled device and/or means to the actual and/or forecasted behaviour.

In particular, the processing device analyses information of at least one sensing means as well as further information received from the communication device, in particular further information regarding outer weather conditions and/or weather forecasts.

The above-mentioned aspects and features of the present invention and the aspects and features of the present invention that will become apparent from the claims and the following description can, in principle, be implemented independently from one another, but also in any combination or order.

Other aspects, advantages, features and properties of the present invention will become apparent from the claims and the following description of a preferred embodiment with reference to the drawings, in which:
- Fig. 1: is a schematic perspective view of a proposed system;
- Fig. 2: is a schematic perspective view of a proposed carriage;
- Fig. 3: is a schematic view of parts of a further embodiment of the proposed system;
- Fig. 4: is a schematic view of parts of a further embodiment of the proposed system;
- Fig. 5: is a schematic perspective view of a further embodiment of the proposed system;
- Fig. 6: is a schematic perspective view of a further embodiment of the proposed system;
- Fig. 7: is a schematic perspective view of a further embodiment of the proposed system;
- Fig. 8: is a schematic perspective view of a further embodiment of the proposed system; and
- Fig. 9: is a schematic perspective front view of a further embodiment of the proposed carriage.

In the Figures, the same reference signs are used for the same or similar parts and components, resulting in corresponding or comparable properties, features and advantages, even if these are not repeatedly described.

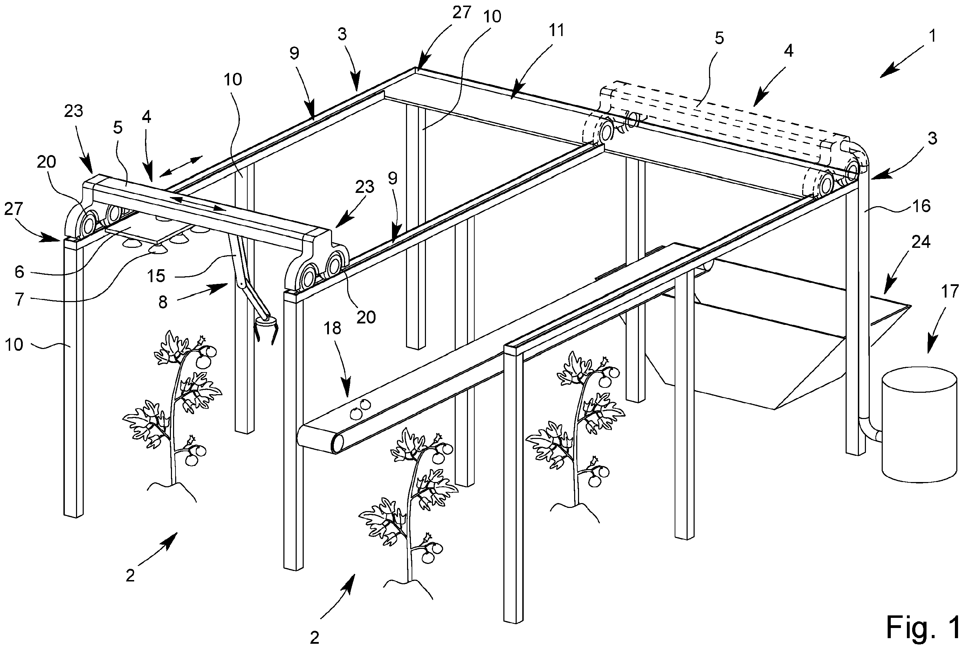

Fig. 1 is a schematic perspective view of a proposed system 1 comprising a linear guide 3 and a carriage 4. The system 1 is used in precision, smart and/or automated farming application. Further, the system 1 is arranged on a land lot 2.

Preferably, the carriage 4 is moveable along the linear guide 3, in particular in a longitudinal direction. The longitudinal direction is in the following referred to as X-direction.

Further, Fig. 1 shows that the carriage 4 comprises a transverse guide 5. The transverse guide 5 is preferably configured to guide a platform 6 in a lateral direction, which is in the following referred to as Y-direction. The Y-direction can be transverse to said linear guide 3 and/or to the X-direction.

Mostly preferably, at least one sensing means 7 for sensing a cultivation related property and/or a cultivation means 8 for cultivation of the soil and/or plants of the land lot 2 or of one or multiple sections thereof is/are provided.

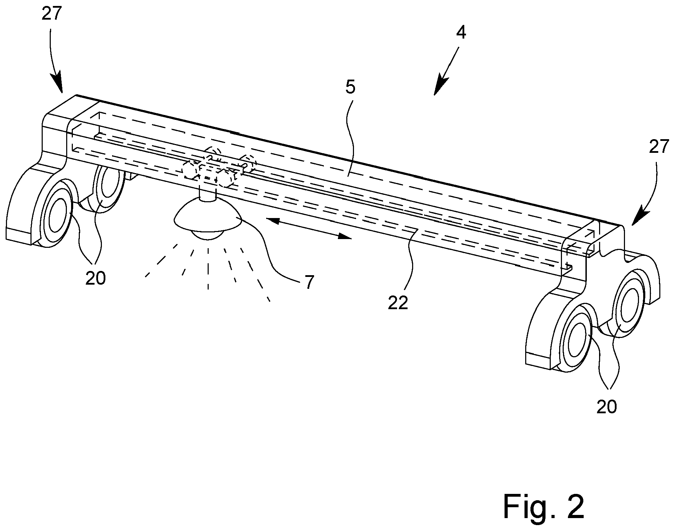

Fig. 2 shows that at least one sensing means 7 is provided on the carriage 4.

Preferably, Fig. 1 shows that at least one cultivation means 8 is provided on the carriage 4, in particular on the platform 6.

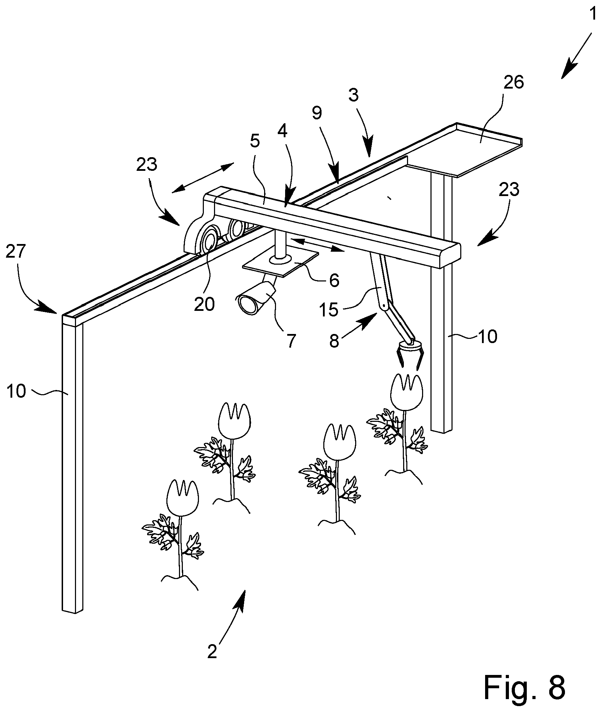

Fig. 8 shows that at least one sensing means 7 is arranged on the carriage 4.

In particular, the system 1 can be used for efficient phytoremediation of industrial contamination, phytomining or biofortification. The damage-specific remediation and/or the sensing means 7 and/or the system 1 can include artificial intelligence controlled plant-growth and contaminant monitoring in several scenarios where soil includes e.g. heavy metal, oil sludge, or important metals to be mined.

Especially, continuous monitoring and analysis of every single operation via the sensing means 7 will help in maintenance planning and down-time prevention.

Preferably, vertical areas typically utilised as green facades can benefit from the system 1 as well for monitoring, in particular via the sensing means 7, and/or for watering and/or for spraying, preferably via the cultivation means 8.

More preferably, the system 1 has very small footprint on the ground and can be easily removed when no longer needed.

Fig. 8 shows that the linear guide 3 comprises at least one rail 9. The rails 9 can preset the X-direction.

Especially preferably, the rails 9 are arranged parallel next to each other.

Moreover, Fig. 1 shows that the carriage 4 is arranged between two rails 9. In the illustrated embodiment shown in Fig. 1 the linear guide 3 comprises two rails 9. Thus, four rails 9 are provided.

Preferably, the linear guides 3 are arranged not only next to each other but also parallel to each other, in particular wherein the land lots 2 are arranged next to each other.

Further, Fig. 1 shows that preferably the carriage 4 is mounted in a movable manner on and/or to the linear guide 3, in particular at the ends 23 of the carriage 4.

The carriage 4 can comprise wheels 20 or rolls for moving along the linear guide 3, in particular the rails 9. The wheels 20 can be arranged at the ends 23 of the carriage 4.

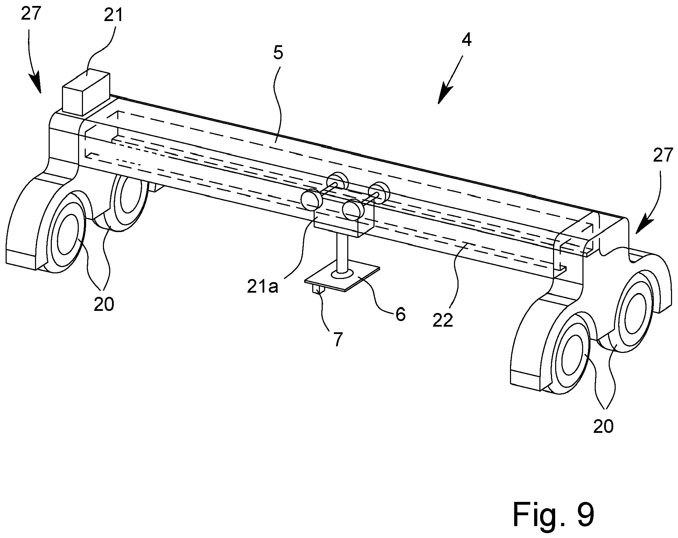

Fig. 9 shows in a perspective a schematic view of the carriage 4 that the carriage 4 can comprise a driving device 21 which is assigned to the carriage 4 in such a way that the carriage 4 is movable in X-direction.

Fig. 9 shows that the platform 6 is connected to the driving device 21, wherein a further driving device 21a can be integrated in the carriage 4. In particular, the platform 6 as well as the further driving device 21a can be moved in the Y-direction via a slit-shaped guide 22.

Preferably, the linear guide 3 is connected to at least one pillar 10. Fig. 1 shows that the linear guide 3 is in particular connected to at least two pillars 10, preferably at the ends 27 of the linear guide 3, in particular at the ends 27 of the rails 9.

It has to be understood that also further pillars 10 can be attached to the linear guide 3 - in particular for support. By means of the pillars 10 the linear guide 3 can be spaced apart from the floor above it is arranged, preferably more than 1 m or 2 m or the maximum expectable height of plants to be cultivated on the land lot.

In particular, the sensing means 7 is designed to analyse and/or determine and/or to acquire information, in particular information with regard to a cultivation related property.

Therefore, permanent indicators, preferably soil indicators, can be determined. Thus, information about main environmental constants can be used for the farming application. In particular, the sensing means 7 enables to track a crop's status. Therefore, diseases of the plants can be recognized, preferably in the beginning.

Especially preferably, the system 1 can use information which are not sensed by the sensing means 7, in particular information from an external server 13 or an external weather station. This information can be used for the cultivation of the soil and/or the plants.

More preferably, the sensing means 7 is configured for sensing information about a climatic and/or weather condition, in particular hail, drought and/or rain. Furthermore, the sensing means 7 can alternatively or additionally sense information about the soil, in particular the texture, the depth and/or the nitrogen level(s) of the soil. The sensing means 7 can also be configured for sensing information about a cropping condition, like no-till farming, a weed condition and/or about a disease.

Alternatively or additionally, the sensing means 7 can be configured to sense the sunshine duration, the air humidity, the air temperature and/or the wind speed.

The aforementioned conditions are in particular related to the cultivation related property that can be sensed via the sensing means 7. This information can be used for the cultivation, in particular for the cultivation with the cultivation means 8.

In particular, at least one sensing means 7 comprises at least one sensor and/or camera.

Preferably, the sensing means 7 can also be used for area security surveillance and/or mapping, in particular outside the land lot 2.

More preferably, the sensing means 7 can used for water level measurement, which can help in optimisation of plant, preferably rice, growing.

In particular, the platform 6 and/or the carriage 4 can even be manned - e.g. for fruit hand picking. Alternatively, a human remotely operated system 1 for specific surveillance needs can preferably be ensured.

Fig. 1 shows in an illustrative example that the system 1 comprises a changing means 11. The changing means 11 is in particular provided and configured to enable the carriage 4 to cross and/or to change the linear guides 3, preferably to adjacent linear guides 3. Thus, the changing means 11 can be regarded as a bridge between two linear guides 3. The changing means 11 can allow a transition between the two immediately adjacent rails 9. Thus, one carriage 4 can be used on different land lots 2.

The changing means 11 can comprise a conveyer means, in particular a conveyer belt. Alternatively or additionally, the wheels 20 and/or rolls of the carriage 4 can be designed to move not only in the X-direction but also in the Y-direction.

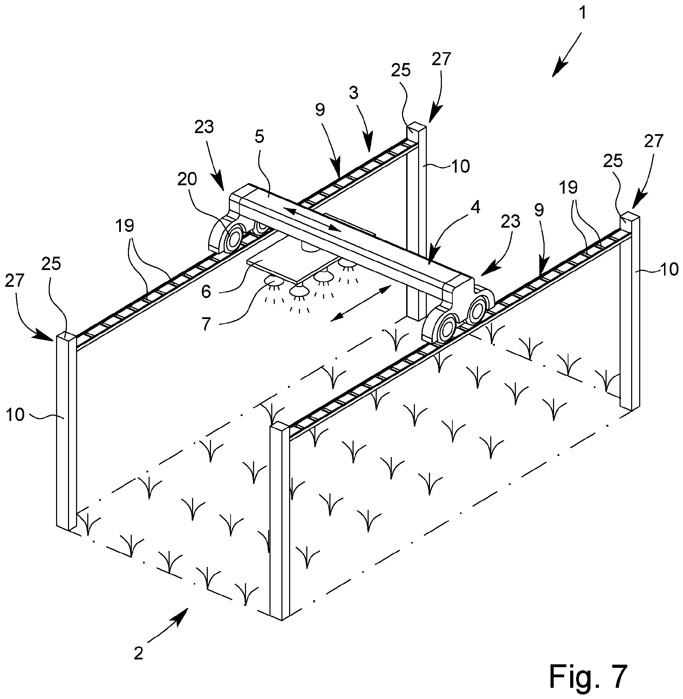

Fig. 7 shows in a schematic perspective view of the system 1 that at least one cultivation means 8 is arranged movable on the carriage 4, preferably movable along the longitudinal extension of the carriage 4.

Fig. 2 shows that at least one sensing means 7 is arranged movable on the carriage 4, in particular movable along the longitudinal extension of the carriage 4 and/or movable along the Y-direction.

In particular, the sensing means 7 and/or the cultivation means 8 can be driven by the driving device 21 or individual own assigned drive means.

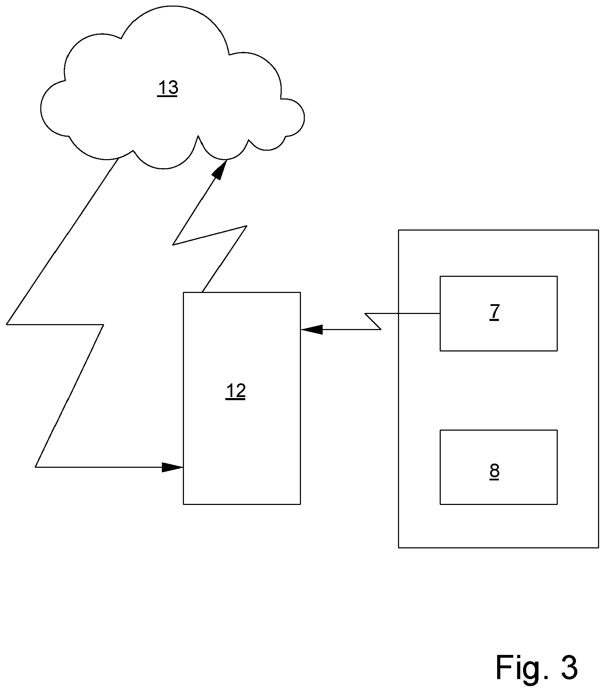

Fig. 3 shows a schematic view of parts of the system 1.

Further, Fig. 3 shows schematically that a communication device 12 is assigned to the sensing means 7 in such a way that information generated or sensed by the sensing means 7 can be transmitted by the communication device 12. The information of the sensing means 7 can relate to the land lot 2 and/or to the cultivation related property.

Especially preferably, the communication device 12 can transmit information to an external server 13.

Alternatively or additionally, the communication device 12 can be designed to receive information, in particular information from an external server 13 and/or information concerning the farming application and/or the land lot 2.

The communication device 12 can be arranged on the carriage 4, the platform 6, the linear guide 3 and/or at least close to the land lot 2. The communication device 12 can communicate with the sensing means 7 and/or an external server 13, in particular wireless.

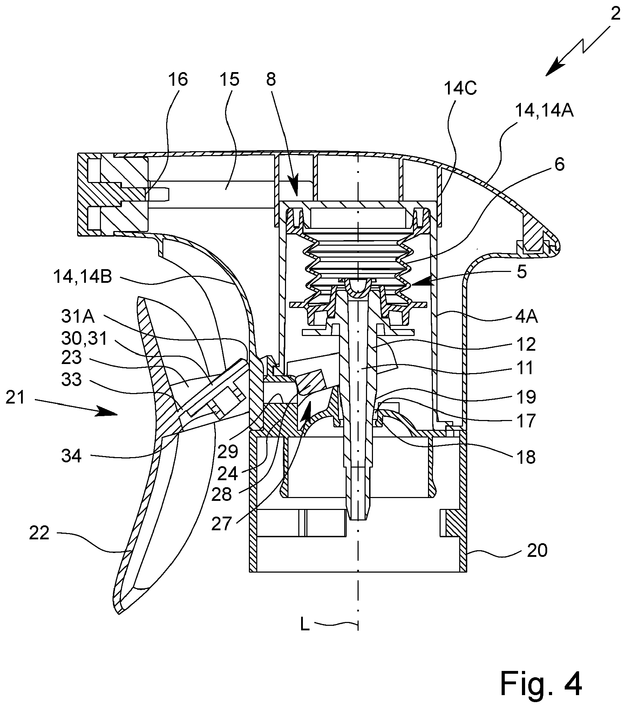

Fig. 4 shows in a highly schematic view that a processing device 14 is assigned to at least one sensing means 7 and/or to the communication device 12. The processing device 14 can receive information, in particular concerning the cultivation related property, concerning the farming application and/or the land lot.

Especially preferably, the processing device 14 is designed to generate signals for cultivation of soil and/or plants. Alternatively or additionally, the processing device 14 can acquire information with at least one sensing means 7.

In particular, the processing device 14 is arranged on the carriage 4 and/or the platform 6. Further, Fig. 4 shows that the processing device 14 is coupled or linked to the cultivation means 8 and the sensing means 7. In particular, the processing device 14 can control the functioning of the respective means 7, 8.

In further embodiments, which are not shown, the processing device 7 can be coupled to the carriage 4, the platform 6, the driving device 21 and/or further devices and/or means of the system 1 in order to control the functioning of the respective device and/or means.

With the processing device 14 the cultivation of the soil and/or plants can be adapted to the cultivation related property sensed by the at least one sensing means 7 and/or to information concerning the farming application, like outer weather conditions, that can in particular be received from the external server 13.

Moreover, the processing device 14 can also analyse and/or process the received data, in particular to generate the signals for the cultivation of the soil and/or plants.

In particular, the processing device 14 can directly execute subsequent processes. Especially, the analysis of the data and the derivation of subsequent processes via the processing device 14 may occur in a centralized computer or cloud service, or in an onboard device on the carriage 4.

More preferably, physical and other processes, in particular carried out by the at least one cultivation means 8, might also be applied without collecting and analysing pictures and data before.

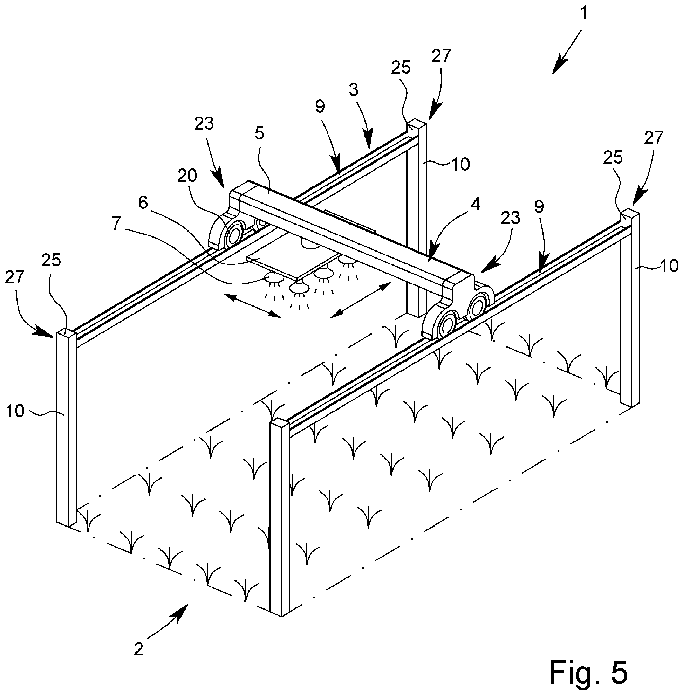

Fig. 5 shows that the cultivation means 8 is designed to applicate cultivation material on the land lot. The cultivation material can be seeds, water, herbicides, fertilizers and/or pesticides.

Fig. 1 shows that the cultivation means 8 can comprise at least one robot arm 15. The robot arm 15 can be designed to work, preferably for digging, harvesting and/or weed and/or waste removal, the soil and/or the plants of the land lot 2.

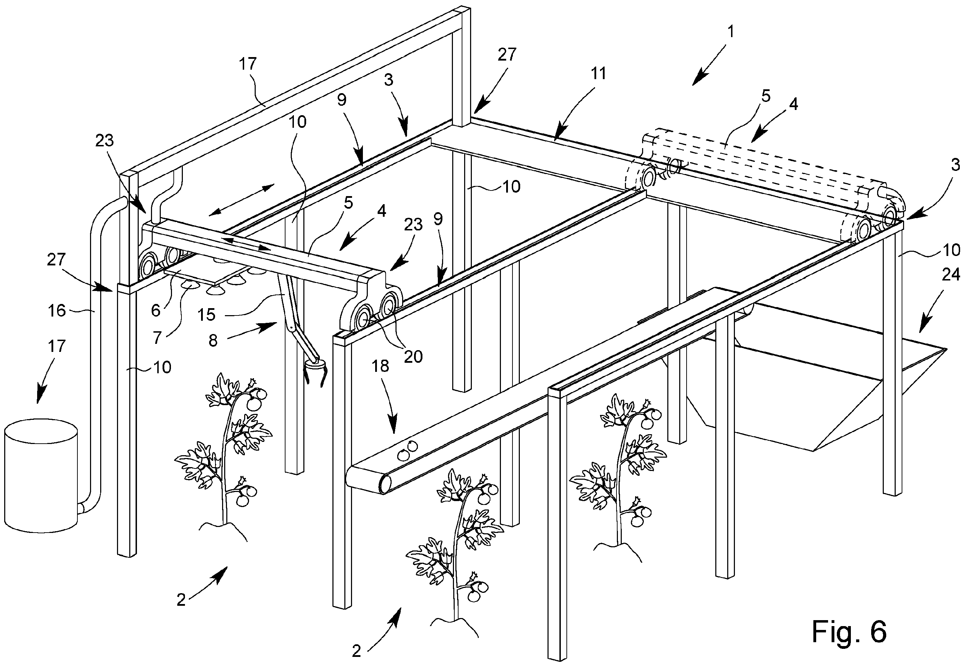

Fig. 6 shows that the linear guide 3 preferably comprises and/or is assigned to at least one supply means 16 which is in particular arranged on or next to the linear guide 3. Fig. 6 shows that the supply means 16 can comprise a tube. In further preferred embodiments, the supply means 16 can comprise a supply line, a tube, a pipe, a gutter and/or a conveyer belt. Preferably, the supply means 16 can supply the cultivation means 8 with cultivation material. Alternatively or additionally, the supply means 16 can be used for supplying water, energy and/or farming material and/or is used for data transfer.

Further, Fig. 6 shows that the carriage 4 is designed to be connected to the supply means 16. Thus, the cultivation means 8 can be supplied with cultivation material.

Fig. 1 shows that a supply station 17 is used for supplying the carriage 4. The supply means 16 can in particular be connected with the supply station 17 to be supplied with the supply material, preferably for the cultivation means 8.

Especially preferably, Fig. 1 shows that the linear guide 3 comprises and/or is assigned to at least one transport means 18. In particular, the transport means 18 is arranged on at least one rail 9 of the linear guide 3 and/or on the pillars 10.

In particular, the transport means 18 can comprise a tube, a pipe, a gutter and/or a conveyer belt.

Fig. 1 shows that the transport means 18 is configured as a conveyer belt which is designed to remove material.

In particular, the removed material can be harvesting material and/or waste, in particular of the land lot 2 and/or gathered from at least one cultivation means 8.

Especially, the cultivation means 8 can be designed in such a way that material can be placed on the transport means 18.

In particular, the transport means 18 can lead to a centralized station 24, in particular for dropping the transported goods and/or to unload the material.

Fig. 7 shows that the linear guide 3 comprises positioning means 19, preferably cogs. The positioning means 19 can be used for precision positioning of the carriage 4. In particular, the carriage 4 is designed to detect the positioning means 19 for location specification and/or location determination.

Preferably, the positioning means 19 are arranged on the surface of the rail 9 facing the carriage 4, as shown in Fig. 7.

In particular, the cultivation means 8 can comprise a wheel, a coulter, a harrow, a tank, a spray valve and/or a cartridge.

Fig. 7 shows that stops 25 are arranged at the end of the rails 9, in particular to stop the movement of the carriage 4.

Especially preferably, the sensing means 7 and/or the cultivation means 8 is arranged changeable at the carriage 4 and/or the platform 6.

Fig. 8 shows that at least one parking lot 26 is arranged next to and/or on the linear guide 3, preferably on and/or next to at least one rail 9. The parking lot 26 can be used for parking and/or temporarily storying the carriage 4.

It is not shown that a tool changing station is provided. The tool changing station can in particular be arranged next to and/or on at least one linear guide 3, preferably at least one rail 9. The tool changing station can be designed to change, in particular manually and/or automated, the equipment, preferably of the sensing means 7 and/or of the cultivation means 8.

Especially preferably, the tool changing station can be used to store different tools for the carriage 4 and/or to change the respective tools.

Furthermore, the system 1 can in particular be coupled and/or combined with other systems on the land lot 2, in particular walls or installation of a greenhouse, a drainage systems and/or at least one photovoltaic installation.

Preferably, the carriage 4 comprises cleaning means which can be used to clean and/or to wash the photovoltaic installation.

In particular, the land lot 2 is inside a restricted area like an air field, a military base and/or a prison. In the aforementioned areas in particular huge amounts of land lie unexploited. Thus the system 1 can serve double purpose preferably as a surveillance platform and situation awareness monitor as well.

More preferably, the system 1 can enable an integration with logistical terminals where fast-growing or high value crops can be directly collected and shipped without human intervention preferably together with sales planning based on market value vs crop ripeness.

Preferably, the carriage 4 can comprise sensors for rapid field mapping and/or to control the photovoltaic installation. These sensors can a part of the sensing means 7 or can be further sensors which can be arranged on the carriage 4.

Especially preferably, the system 1 comprises or is coupled to a defence device against bird. The defence device can in particular include a fast sound and/or flash platform.

In particular, the sensing means 7 can be used to collect pictures and data which may be used for establishing documentations and time series, in particular about plant and field conditions, soil moisture, plant nutrient matter(s) and diseases. Furthermore, these collected pictures and data may be analysed and/or processed with the processing device 14, in particular by artificial intelligence to learn for example about e.g. crop and/or ground conditions, water, soil moisture, planned nutrient matter and diseases as well as the impact of the performed actions on these or other dimensions.

In particular, the system 1 can economically utilise even highly fragmented, remote or low-yield areas such as vast swaths of land around linear infrastructures, like highways, railways etc., or on roof installations and/or on soil damaged by desertification.

According to the proposed method for using a system 1 according to one of the aforementioned embodiments the carriage 4 can move in X-direction. The method can be used for precision, smart and/or automated farming of a land lot.

In particular, the sensing means 7 can sense cultivation related property. Alternatively or additionally, the cultivation means 8 cultivates the soil and/or plants of the land lot 2 or of one or multiple sections thereof.

Preferably, the platform 6, in particular together with the sensing means 7 and/or the cultivation means 8, moves in Y-direction.

Especially preferably, the functioning of at least one cultivation means 8 and/or at least one sensing means 7 is controlled by the processing device 14. In particular, the processing device 14 controls all cultivation means 8 and/or all sensing means 7.

Preferably, the processing device 14 analyses and/or processes information with artificial intelligence to generate signals for the cultivation of the soil and/or plants of the land lot 2 and/or to acquire and/or determine further information with at least one sensing means 7.

Fig. 4 shows that the processing device 14 analyses information of at least one sensing means 7 as well as further information received from the communication device 12, in particular further information regarding the outer weather conditions and/or weather forecasts. The further information can come from an external server 13.

### List of Reference Signs:

| | | | |
|---|---|---|---|
| 1 | system | 15 | robot arm |
| 2 | land lot | 16 | supply means |
| 3 | linear guide | 17 | supply station |
| 4 | carriage | 18 | transport means |
| 5 | transverse guide | 19 | positioning means |
| 6 | platform | 20 | wheels |
| 7 | sensing means | 21 | driving device |
| 8 | cultivation means | 21a | further driving device |
| 9 | rail | 22 | guide |
| 10 | pillar | 23 | end of 4 |
| 11 | changing means | 24 | centralized station |
| 12 | communication device | 25 | stop |
| 13 | external server | 26 | parking lot |
| 14 | processing device | 27 | end of 3 |

## Claims

1. System (1) for the use in precision, smart and/or automated farming applications and for arrangement on a land lot (2) comprising at least one linear guide (3) and at least one carriage (4), in particular moveable along the linear guide (3), preferably in a longitudinal direction, in the following referred to as X-direction,
wherein the carriage (4) comprises a transverse guide (5) configured to guide a platform (6) in a lateral direction, in the following referred to as Y-direction, transversely to said linear guide (3) and/or X-direction,
wherein at least one sensing means (7) for sensing a cultivation related property and/or a cultivation means (8) for cultivation of soil and/or plants of the land lot (2) or of one or multiple section(s) thereof is/are provided,
wherein the sensing means (7) and/or the cultivation means (8) is arranged on the carriage (4), in particular on the platform (6).

2. System according to claim 1, **characterized in that** the linear guide (3) comprises rails (9), preferably two rails (9) that are arranged, preferably parallel, next to each other, wherein, preferably, the carriage (4) is arranged between two rails (9).

3. System according to any one of claims 1 to 2, **characterized in that** the linear guide (3) is connected to pillars (10) for spacing from the land lot (2).

4. System according to any one of claims 1 to 3, **characterized in that** the sensing means (7) is configured for sensing information about a climatic and/or weather condition, in particular hail, drought, sunshine duration, air humidity, air temperature, wind speed and/or rain, about a soil condition, in particular texture, depth and/or nitrogen levels, about a cropping condition, in particular no-till farming condition, weed condition and/or about a disease(s).

5. System according to any one of claims 1 to 4, **characterized in that** a changing means (11) is provided and configured to enable the carriage (4) to cross and/or to change the linear guides (3), preferably two adjacent linear guides (3).

6. System according to any one of claims 1 to 5, **characterized in that** at least one sensing means (7) and/or at least one cultivation means (8) is arranged movable on the carriage (4), preferably movable along the longitudinal extension of the carriage (4).

7. System according to any one of claims 1 to 6, **characterized in that** a communication device (12) is assigned to the sensing means (7) in such a way that information generated by the sensing means (7) can be transmitted, in particular to an external server (13), and/or in such a way that information can be received, preferably from an external server (13).

8. System according to any one of claims 1 to 7, **characterized in that** a processing device (14) is assigned to at least one sensing means (7) and/or to the communication device (12) to receive information concerning the farming application and/or the land lot (2), wherein the processing device (14) is coupled to the cultivation means (8), the sensing means (7), the carriage (4) and/or the platform (4) in order to control the functioning of the respective device and/or means.

9. System according to any one of claims 1 to 8, **characterized in that** at least one cultivation means (8) is designed to applicate cultivation material on the land lot (2) and/or **in that** at least one cultivation means (8) comprises at least one robot arm (15) to work the soil and/or the plants of the land lot (2).

10. System according to any one of claims 1 to 9, **characterized in that** the linear guide (3) comprises and/or is assigned to at least one supply means (16), preferably for water and/or energy and/or farming material and/or data transfer, wherein the supply means (16) is connected to at least one supply station (17) which is arranged on and/or next to the linear guide (3), and/or
**in that** the linear guide (3) comprises and/or is assigned to at least one transport means (18) to remove material of the land lot (2).

11. System according to any one of claims 1 to 10, **characterized in that** the linear guide (3) comprises positioning means (19) for precision positioning of the carriage (4), wherein the carriage (4) is designed to detect the positioning means (19) for location specification and/or location determination.

12. Method for using a system (1) according to one of the proceeding claims for precision, smart and/or automated farming of a land lot (2),
wherein the carriage (4) moves in X-direction,
wherein the sensing means (7) senses a cultivation related property, and/or
wherein the cultivation means (8) cultivates the soil and/or plants of the land lot (2) or of one or multiple sections thereof.

13. Method according to claim 12, **characterized in that** the platform (6) moves in Y-direction.

14. Method according to any one of claims 12 or 13, **characterized in that** the functioning of at least one cultivation means (8) and/or at least one sensing means (7) is controlled by the processing device (14) and/or **in that** the processing device (14) analyses and/or processes information with artificial intelligence to generate signals for soil and/or plants cultivation of the land lot (2) and/or to acquire and/or to determine further information with at least one sensing means (7).

15. Method according to any one of claims 12 to 14, **characterized in that** the processing device (14) analyses information of at least one sensing means (7) as well as further information received from the communication device (12).
